# EUROPEAN PATENT SPECIFICATION

(11) **EP 3 274 518 B1**
(45) Date of publication and mention of the grant of the patent: **24.07.2019**
(21) Application number: 16716708.9
(22) Date of filing: 23.03.2016
(51) Int. Cl.: E04D 13/00, G01M 3/16

(54) **SYSTEM FOR THE DETECTION OF A LEAKAGE IN A ROOF**
SYSTEM ZUR DETEKTION EINES LECKS IN EINEM DACH
SYSTÈME DE DÉTECTION D'UNE FUITE DANS UN TOIT

(30) Priority: 23.03.2015 NL 1041237
(43) Date of publication of application: 31.01.2018
(73) Proprietor: ABS Infradvies B.V., 8102 GK Raalte (NL)
(72) Inventor: BRUINS SLOT, Albert, 8102 ME Raalte (NL); APPELS, Christiaan Leendert, 8749 GP Pingjum (NL)
(74) Representative: Ferguson, Alexander
(86) International application number: PCT/NL2016/000007
(87) International publication number: WO 2016/153337

(56) References cited:
- EP-A1- 2 236 691
- DE-A1- 3 636 074
- DE-A1- 4 024 049
- US-A- 4 598 273
- US-A- 6 040 775

## Description

### BACKGROUND OF THE INVENTION

The invention relates to a flat or slightly pitched roof, having a continuous, connected roof covering layer ensuring sealing from precipitation. The invention relates to a detection system for leaks in such a roof.

The roof covering layer can be a bituminous layer, an EPDM layer or something similar. The roof covering layer may be exposed, or be covered with grit material. The roof covering layer may also be ballasted, for instance by gravel, tiles or a sedum layer. In hot roof arrangements the roof covering layer usually sits on a thermo-insulating layer of plates of EPS, polyurethane (PUR), Polyisocyanurate (PIR), stone wool, et cetera, which in turn sit on a vapour barrier or sealing layer, below which the supporting, closing roof structure, for instance including profiled steel sheets, concrete hollow-core slabs or wooden boarding is situated.

The invention further relates to a thermally insulating plate for use in a flat roof or a slightly pitched roof and to a roof leak detection system for such a roof.

In flat roofs and slightly pitched roofs, water remains in situ longer than is the case in pitched roofs that are usually covered with pantiles. In case of a damaged roof covering layer, standing water may result in a prolonged leakage. Before such leakage is noticed - after a long time - the underlying structural elements and finishing parts may have been considerably affected by the action of moisture, often resulting in such elements/parts having to be replaced. Furthermore, the insulating layer may lose part of its effectivity due to the absorption of water. Absorption of water may also result in the weight of the roof increasing undesirably, possibly resulting in structural elements collapsing.

In the case of the roof being covered with a layer of material, such as a ballast layer or a sedum layer, said layer has to be largely removed in order to get to the roof covering layer and be able to inspect it, which requires a lot of time and effort. That is also the case if a support structure for solar panels has been placed on the flat roof.

Roof leak detection systems for flat roofs are known in several forms. In an existing system providing permanent monitoring, use is made of detecting a potential difference over the roof covering layer, wherein above and below the roof covering layer electrically conductive membranes have been arranged, above the insulating layer. When a leakage path through the roof covering layer arises, a circuit closes resulting in a signal that there is a leak being given. Also see German utility model 201 19 686. In a known further development thereof, the leakage location can also be determined by means of a vector system.

In another known system, see US patent 5.648.724, a double electric conductor has been arranged in the top side of the insulating layer, below the roof covering layer, which conductor is surrounded by an insulation of which the dielectric constant changes under the influence of moisture. The conductors emit pulses, wherein a change in the reflection is an indication for leakage and its location.

In actual practice it often turns out to be difficult for persons placing roof coverings to perform specific additional actions. Conventional actions, such as the placing of a vapour barrier or sealing layer, placing plates of insulating material, placing a layer of bitumen and ballasting come easily to roofers. However, when for instance an electrical system has to be installed, their professional knowledge and skills often fall short. This may result in an added system not functioning as it should do.

Furthermore, a wireless system is known from US patent 4.598.273, wherein a number of spaced apart transmitter units with electronic radio transmitters have been placed in recesses in the top side of an insulating layer situated directly below a roof covering layer, each of the transmitters being fed by its own power source in response to the presence of water. The transmitted signal is received by a remote central receiver determining the transmission direction and in that way on which building the leak has been detected. A workman will then have to get on the roof and by means of a detector localize the radio transmitter in question and thus the location of the leak. This known system requires leakage water to end up in the recess in the insulating plate in order for a transmitter to be able to start working. Other existing leakage paths, such as via joints between the insulating plates and via the insulating material itself may result in leakage water not being able to reach said recess. In this system it is possible that condensate against the bottom side of the roof covering layer results in an unjustified report of leakage.

DE 40 24 049 A1, US 4.598.273 A, EP 2 236 691 A1, US 6.040.775 A and DE 36 36 074 A1 disclose further known leak detection systems.

### SUMMARY OF THE INVENTION

It is an object of the invention to provide a roof leak detection system that is easy to place.

It is an object of the invention to provide a roof leak detection system that is suitable to be placed by regular roofing personnel.

It is an object of the invention to provide a roof leak detection system that has a simple set-up.

It is an object of the invention to provide a roof leak detection system that can be realised at low cost.

It is an object of the invention to provide a roof leak detection system that is able to function reliably.

It is an object of the invention to provide a roof set-up using such a roof leak detection system, as well as components for it.

For achieving at least one of these objects the invention, according to one aspect, provides a roof according to claim 1 including a supporting structure, a vapour barrier or sealing layer situated above the supporting structure, a thermally insulating layer composed of horizontally connecting insulating plates, which layer has been placed on the vapour barrier/sealing layer, and a layer of waterproof roof covering situated above the insulating layer, wherein at least one transmitter unit has been arranged in the thermally insulating layer, preferably in the bottom side of the thermally insulating layer, which transmitter unit is operationally connected to a moisture sensor that has been provided with moisture contact points or electrodes that electrically cooperate together and are situated at the bottom side of the thermally insulating layer, wherein the transmitter unit has been configured for transmitting a (data) signal, indicative of, containing a measurement of, the presence of water/moisture at the electrodes, in particular of the moisture contact points or electrodes contacting water. Contact here means both a physical, electric contact of the electrodes with water as well as water being in the sphere of influence of the electrodes, such as in a capacitive measurement

Preferably the transmitter unit has also been configured for transmitting a signal that is indicative of the transmitter unit's location.

It is thus achieved that by means of the moisture contact points or electrodes, detecting a leak takes place at the lowest possible level in the roof covering, namely at vapour barrier or sealing layer level, where water may accumulate and remain in situ over a longer period of time, thus increasing the chances of a transmitter unit actually being reached, and a signal indicative of moisture contact (moisture signal) being emitted by it. In the preferred embodiment it can be determined on the basis of the signal containing the ID and/or location data, which transmitter unit has emitted the signal, on the basis of which the leakage location can be determined elsewhere. Both signals can be individual signals, for instance emitted shortly one after the other, or be part of a single signal. A data collection/processing unit for processing the signals can be situated elsewhere.

Additional, complicated actions will not be required when placing the roof covering. The roofer is able to arrange the roof covering in the usual way and in the usual order. There are no external signal wires which therefore do not have to be placed either. It may be desirable however, to take note of where exactly the insulating plates provided with a transmitter unit are going to be placed, or where the transmitter units have to be placed between the insulating plates, but this will part of the roofer's skills. For that purpose, the top side of the insulating plates may for instance have been provided with a marking. Running a check after placing the insulating layer will therefore be simple. When walking over the insulating plates there will be no risk of damaging the transmitter units, as they have been arranged at the bottom side of the insulating plate and remain spaced apart from the top surface of the insulating plate.

Due to the distance to the bottom side of the roof covering layer, which distance is defined by the thickness of the insulating layer, the risk of unjustified leakage reports caused by condensation against the bottom side of the roof covering layer, is minimised. Should there be question of excessive condensation, caused by a structural fault, possibly resulting in the insulating layer getting wet and as a consequence functioning worse, and the structure possibly getting too heavy, this can be detected sooner with the measures according to the invention. The structural fault can then be corrected.

According to said one aspect of the invention the moisture contact points or electrodes are operationally connected to one or more strips or a layer of moisture-absorbing or moisture-transporting material, which strip or layer has been arranged at the bottom side of the insulating plate in question. Said strip/strips or layer enhances/enhance the process of bringing the moisture sensor, and thus - functionally- the transmitter unit, in operational contact with leakage water. The moisture-absorbing or moisture-transporting material then forms a damp space between both moisture contact points or electrodes. In one embodiment the moisture contact points or electrodes are in engagement with the moisture-absorbing or moisture-transporting material, in particular extend into it.

In an effective embodiment thereof, wherein the insulating plate in question has edges bounding the bottom side, the one or more strips or the layer of moisture-transporting material extends/extend into at least one of edge, preferably into each edge. Preferably the one or more strips or the layer extends/extend along the entire circumference of the bottom side. In one embodiment the one or more strips or the layer of moisture-transporting material extends/extend to beyond the circumferential edge of the insulating plate and thus extends/extend into, and optionally over, the joint between adjacent insulating plates, as a result of which the detection process can be set into motion as soon as possible, by guiding moisture to the moisture contact points or electrodes. In case of strips the moisture can be guided according to the path of the strip in question.

In a simple embodiment the moisture-transporting material forms a layer attached to the bottom side of the insulating plate in question, which layer preferably at least almost covers the entire surface of the insulating plate.

A glass fibre membrane may be suitable as moisture-transporting material.

In one embodiment the transmitter unit has been provided with a transmitter for transmitting said signals and with a power source, such as an electrical source, such as a battery, such as a Lithium Thionyl Chloride battery, for the transmitter. There are no external electric wires to a remote power source, as a result of which no mistakes can be made when installing the electric wires on the roof.

In one embodiment the transmitter can be activated by the power source upon the transmitter unit contacting water. In another embodiment the transmitter can be activated by an internal software programme in the sensor. In that way the power source is used as little as possible when transmission capacity is not required, as a result of which lengthy functioning can be guaranteed.

The transmitter unit may comprise a switch activated upon contacting water, for functionally connecting the transmitter with the power source, as known per se from US patent 4.598.273. The active switch can for instance be activated when falling below a specific resistance value between the electrodes. Alternatively, the power source itself can be an electrical source activated upon contacting water, also see the above-mentioned patent 4.598.273.

The transmitter may have been configured for transmitting a signal at fixed points in time, so that it is noticeable that the transmitter units still are (or can be) active, for instance once every twenty-four hours. The moisture signal will be transmitted at any point in time and can therefore be distinguished from the other signals.

It is also possible, in the transmitter unit with the electrodes, to have a measurement for the voltage over the electrodes carried out at fixed points in time, for instance twice every twenty-four hours, and each time have the transmitter transmit the details of those measurements to a data processing unit elsewhere. Values indicative of a regular condition may be stored in said data processing unit, optionally with storage for forming a threshold value. When receiving and processing measurements having values deviating from the stored values, there may be question of a moisture problem. The measurements may for instance be carried out as a resistance measurement (level of voltage) (see DE patent application 36 36 074) or as a capacitive measurement.

When placing the insulating plates, the ID details of the transmitter units can be recorded and mapped out on the basis thereof, so that an ID-signal of a transmitter can be coupled to the location. Alternatively, the transmitter unit may have been provided with a receiver for cooperation with a locator system, such as GPS, and configured for having the transmitter transmit a location signal on the basis thereof.

In a compact and easy-to-handle embodiment of the transmitter unit, the latter has been incorporated in a body enveloping the transmitter and the power source. The moisture contact points or electrodes can then be situated at the exterior thereof. In case of the above-mentioned switch the body may have a bottom side with an access for water to the switch. The body may be hollow, like a housing, and optionally after having placed the components in it, be filled with a synthetic material. The body may also have been made by pouring a synthetic moulding material into a mould around the positioned components.

For enhancing the attachment of the transmitter unit in the insulating plate, the body may have a circumferential wall or circumferential surface having anchoring means, for instance teeth (for instance teeth that are short in circumferential direction, or teeth that run in circumferential direction) a projecting edge in the form of a helix (screw thread) or a series of projecting edges in the form or circles, for attaching the body in an insulating plate, so that dropping out can be prevented. Said screw thread enables the introduction of the body into an insulating plate by a screwing motion, if the body has a circular cross-section.

Placing the transmitter unit in the insulating plate is facilitated if the body, at least in an upper section (the section extending furthest into the insulating plate) tapers into a tip that may or may not be rounded off, in particular be cone-shaped. The apex of the tapering tip here preferably forms an acute angle. The pointed shape enhances the insertion. The cone shape may have one or more flat side surfaces or be curved all round, in particular have a circular base.

A tapering upper section further has the advantage of preventing damage to the housing and the transmitter caused by attachment means, such as roof parker screws, or a drill for making a plug hole in the supporting roof structure, when they are inserted from above through the insulating plate: the tool's head will slide down the tip upon a hit. Such attachment means can be placed for attaching insulating plates and possibly also roof covering material on the underlying supporting roof structure.

The body may have said tapering shape, such as a cone shape, over the full height. Alternatively, the body - considered in vertical direction - may have a multiple shape, for instance with said tapering upper section on a differently shaped lower section, that is cylindrical, for instance. The lower section may have a circumference that equals the upper section's largest circumference. The lower section may also project therefrom.

At the bottom side the body may have been provided with projections that have been integrally formed therewith, in particular situated diametrically opposite each other, providing room to terminals of the electrodes and in case of said threaded body may form a grip facilitating manually screwing the body into the insulating plate.

Depending on the insulating plate's material, the body can be pressed or rotated into it, or a recess into which the body can be accommodated, may have been made in the material in advance.

In one embodiment at least some of the transmitter units have been arranged in recesses made at the bottom side of an insulating plate, spaced apart from the latter's circumferential edge. The transmitter units can (even then) be attached in the insulating plates in advance and will then be placed simultaneously with the action of placing the insulating plates.

Alternatively, at least some of the transmitter units may have been arranged at the location of the transition of two insulating plates. The transmitter units can then be pressed against the vertical circumferential edge of an insulating plate that has already been placed, after which the next insulating plate can be pressed against said already placed insulating plate. The housing of the transmitter unit can then find its place in the material of the insulating plates while pressing in the insulating material, such as EPS.

The insulating plate may have kept its integrity above the transmitter unit and be uninterrupted. In the roof, the transmitter units will be invisible from above.

Leakage water ending up on the vapour barrier via the joints between the insulating plates, can be detected at an early stage by the nearest transmitter unit, arranged in one of the joint-forming insulating plates, or in another nearby insulating plate.

According to a further aspect the invention provides an insulating plate of thermally insulating material according to claim 10, having a top side and a bottom side, wherein at least one transmitter unit has been arranged in the bottom side of the insulating plate, which transmitter unit is operationally connected to a moisture sensor that has been provided with moisture contact points or electrodes that cooperate together and are situated at the bottom side of the insulating plate, wherein the transmitter unit has been configured for transmitting a signal indicative of the presence of moisture/water, in particular of the moisture contact points or electrodes contacting water and preferably a signal indicative of the location of the transmitter unit, wherein the moisture contact points or electrodes are operationally connected to one or more strips or a layer of moisture-transporting or moisture-absorbing material, which strip or layer has been arranged at the bottom side of the insulating plates. Further embodiments of an insulating plate including transmitter unit and moisture contact points or electrodes according to the invention have been discussed above.

For facilitating the installation, the insulating plate according to the invention may, at the top side facing away from the transmitter unit, have been provided with an indicator for the transmitter unit's presence in the plate. Said indicator may have also been placed for indicating the location of the transmitter unit in the plate.

According to a further aspect, the invention provides roof leak detection system comprising a roof according to the invention and a processing unit including a receiver for location signals (ID and/or position signals) and/or signals indicative of the presence of moisture, transmitted by the transmitter units, and a presenting device, such as a display, flashing light, audio signal. The processing unit has preferably been configured for having the presenting device indicate the location of a transmitter unit when the latter has transmitted a signal indicative of the presence of (excessive) moisture. As indicated, the transmitter unit may have been configured for only transmitting a signal indicative of the presence of moisture when a threshold value is exceeded, or may have been configured for at regular points in time transmitting such signals independent of whether a threshold value has been exceeded. In the latter case it will be noticed in the processing unit whether said signal provides a measurement value deviating from a pre-entered threshold value in the sense that it indicates a leakage problem. The processing unit and presenting unit, such as display, can be situated at the same location, for instance be incorporated in one device, or be situated remote from each other, in which case use is made of the internet, for instance of a cloud service.

If the system furthermore comprises an alerting means for making known that a transmitter unit has transmitted a signal indicative of a moisture problem, the user will be warned in time that there is a leak.

The processing unit may comprise a memory for storing data regarding the location of the transmitter units.

The invention is not only advantageous for use on buildings that are being used, but also on empty buildings, where, because no people are present, roof leaks or indications thereof go unnoticed. Considerable damage to roof structures can thus be prevented.

It is noted that when the text says transmitter (unit), there may be question of a combined transmitter/receiver unit. This may also be the case when the text says receiver.

From US patent 5.818.340 a detection system for roof leaks is known, in which distributed over the roof, moisture sensors have been placed, each comprising a (passive) resonance circuit with induction coil and a capacitor, wherein between the electrodes of the capacitor water-absorbing material has been arranged. A strong central pulse transmitter emits a pulse at regular points in time. As a result, the resonance circuits will start resonating at their resonance frequency. This frequency is influenced by moisture. A central receiver at the pulse transmitter is able to notice whether a resonance circuit has a deviating frequency. The location of the moisture sensor in question is then localized using a gate-dipper, which is moved over the roof surface by a workman.

DE patent application 36 36 074 describes a wireless moisture detection system having transmitters and moisture sensors accommodated in housings projecting above the insulating layer, wherein two electrodes extend to near a vapour inhibiting layer. Between both measurement contacts a high measurement resistance has been placed, and both measurement contacts have been connected to a measurement and transmitter unit. The measurement values are continuously transmitted by the transmitter to a central post, in which the measurement values of the transmitters that are part of the system are continuously compared with pre-set measurement values that are lower than the resistance of the measurement resistance.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A and 1B show a side view and an interior, respectively, of a transmitter unit to be used in the invention;
Figure 1C shows an alternative embodiment of a transmitter unit according to the invention, in a diagram;
Figures 1D-G show some varieties of shapes of the body for the transmitter unit;
Figure 2A shows an inclined bottom view of a part of an insulating plate according to the invention;
Figures 2B-E show a few other possible embodiments for the bottom side of an insulating plate according to the invention;
Figure 3A shows a vertical cross-section of an example of a roof leak detection system according to the invention;
Figure 3B shows a schematic top view of a roof for the system of figure 3A; and
Figure 4 shows an alternative exemplary embodiment of a roof leak detection system according to the invention.

### DETAILED DESCRIPTION OF THE DRAWINGS

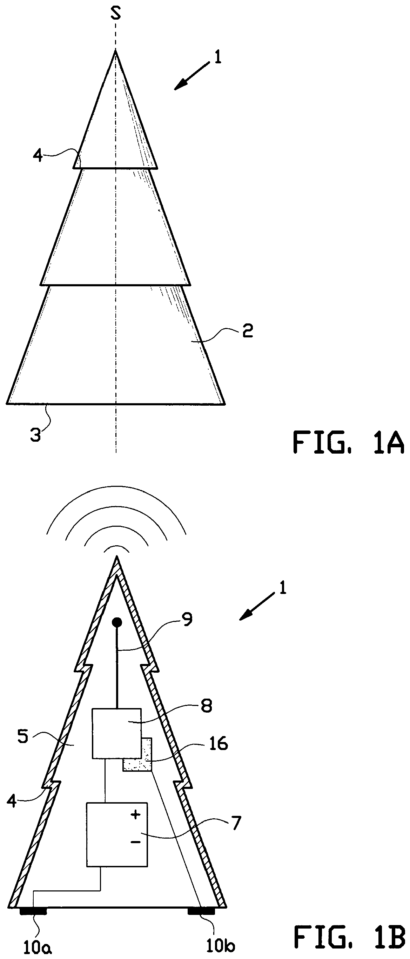

Figures 1A and 1B show a transmitter unit 1 having a conical body 2 with a circular cross-section, made of a suitable, hard synthetic material, for instance a PP or a PA. The height may be 7 cm, the width 5 cm. The centre line S of the conical housing 2 has been indicated. On the circumferential wall, the body 2 has been provided with integrally formed teeth-shaped circumferential ribs 4, that can form a series of circles or can alternatively form a helix.

The body 2 has a housing wall surrounding an interior 5 in which a number of components of the transmitter unit 1 have been attached, such as a power source 7, which in general can be a voltage source or electrical source, in this example a battery 7 (for instance a Lithium Thionyl Chloride battery, for instance of the brand Tadiran), an RF transmitter/receiver 8 (for instance communicating via the dedicated ISM frequency bands), including antenna 9, a set of moisture contact points or electrodes 10a,10b and a processor 16. After placing the components, the body 2 is filled with a moulding material.

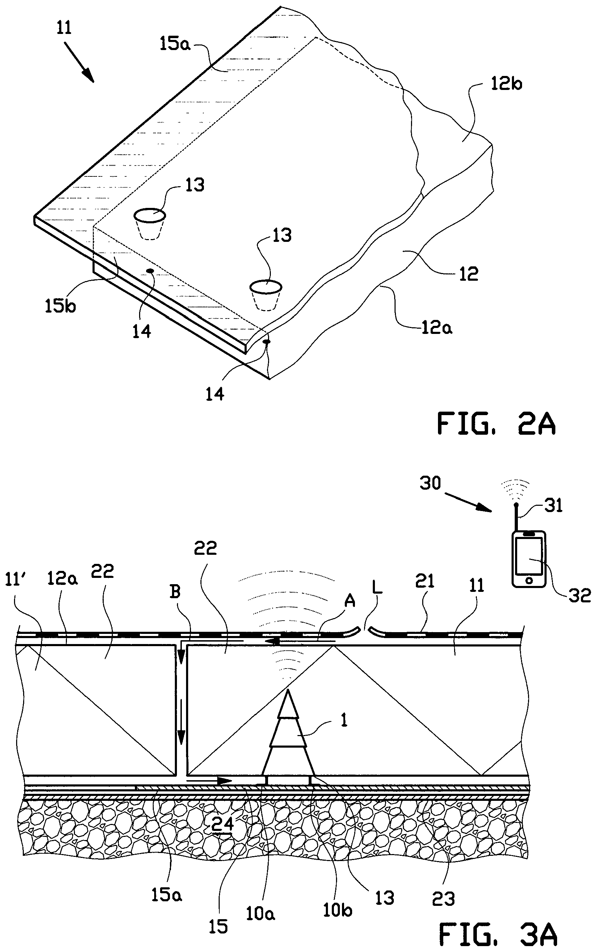

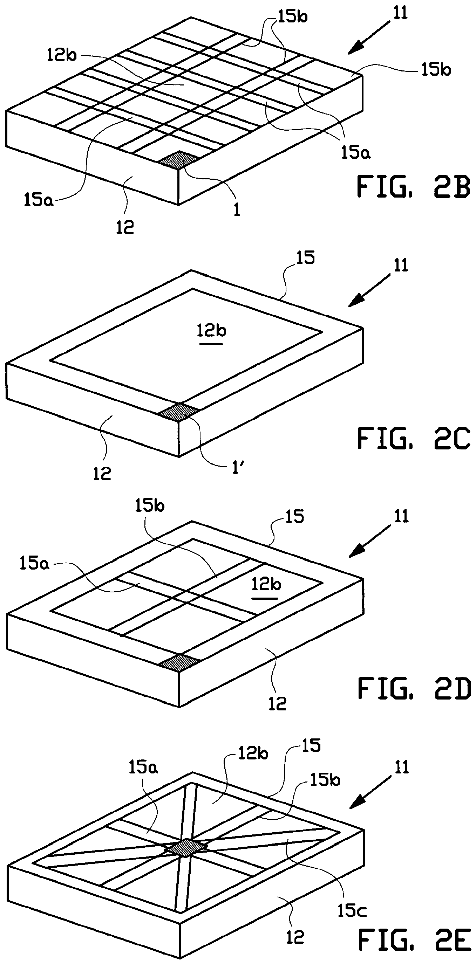

The thermally insulating plate 11 in figure 2 for instance is substantially a block-shaped body 12 made of EPS. For illustration purposes the bottom side 12b is situated on top, in order to show the cone-shaped recesses 13, which recesses 13 can be congruent to the housing 2, without ribs 4. At the opposite side, top side 12a, indicators, markings, 14 have been arranged at the location of the recesses 13. On the building site transmitter units 1 can be pressed into the recesses 13, wherein they are secured against dropping out by the ribs 4 engaging into the insulation material. Preferably the transmitter units 1 have already been attached in the insulating plates elsewhere, in particular in the factory. It is also possible that the transmitter units have been pressed or rotated/screwed into the material of the insulating plate until their base surfaces have come to lie in the plane of the bottom side 12b. The material of the insulating plate can then be displaced, to the side. The said teeth-shaped ribs or helix form an anchoring for the cone in the insulating material.

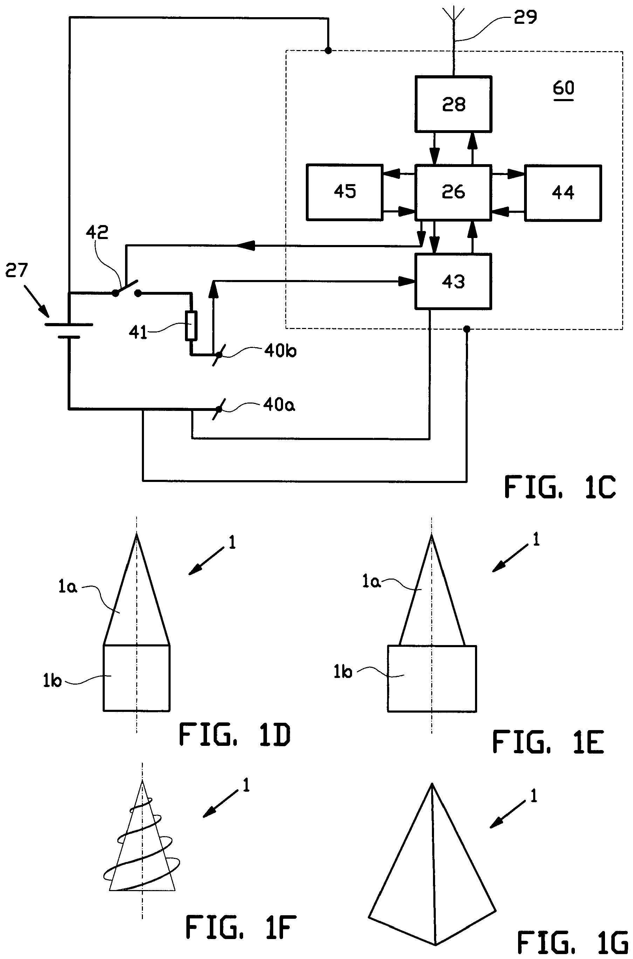

The cone may have side surfaces or a curved circular circumferential surface. The housing 2 can also be configured in stepped, having a conical upper section and a differently shaped lower section, such as in the form of a cylinder. In figures 1D-G a number of other possible shapes of the body have been shown by way of example, in figure 1D a tapering upper section 1a having a circular cross-section and a circle-cylindrical lower section 1b, having a circumference equalling the largest circumference of the upper section, in figure 1E a comparable set-up, yet with a circle-cylindrical lower section 1b having a larger circumference, in figure 1F a body tapering over the full height and having a circular cross-section and an external thread and in figure 1G a tapering body having for instance three or four side surfaces.

As shown in figure 2A, a layer 15 of membrane-like material has been applied to the bottom side 12b, which layer is water-absorbing and water-transporting, for instance substantially consisting of a non-woven glass fibre membrane. The moisture contact points 10a,b extend into the membrane layer 15. In one embodiment with edge strips 15a,b - shown striped - the membrane layer 15 can project from the circumferential edge of the insulating plate 11.

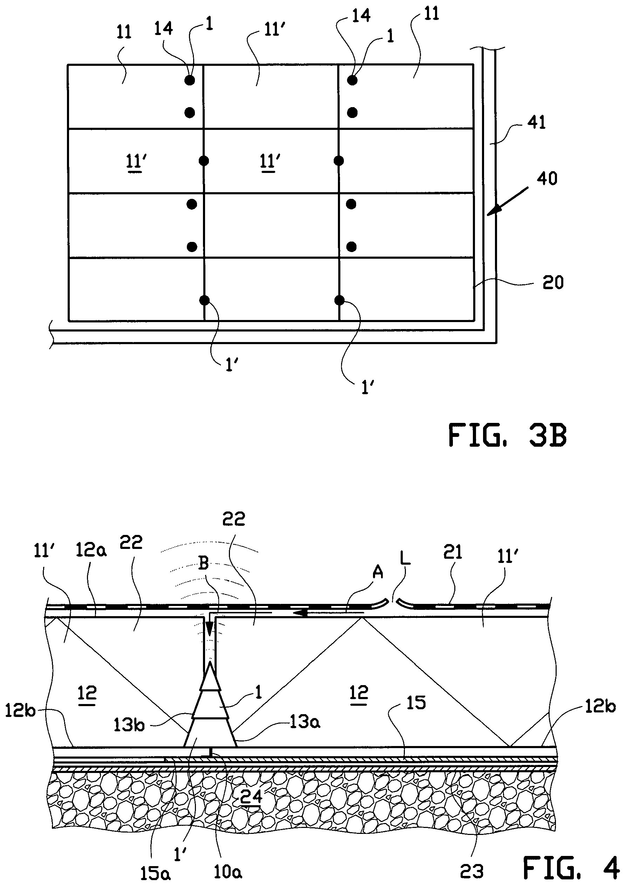

When installing a warm flat roof 20, surrounded by a roof edge 41, on a building 40 (figure 3B), a roofer first places a vapour barrier or sealing layer 23 (figure 3A) on the underlying structure 24 (in this case concrete). Subsequently he places the insulating layer 22 by placing insulating plates 11 (including transmitter units 1) and 11' (regular insulating plates, so without transmitter units 1 and without membrane layer 15) on the sealing layer 23, while using a map of the roof indicating where the plates 11 have to be placed. He then makes sure that the indicators 14 face upwards and are situated at the correct location, see for instance figure 3B. After placing the insulating layer 22 the actual roof covering 21 can be placed, for instance a bitumen layer, and on top of it a ballast in the form of gravel, tiles or rooftop greenery, such a sedum layer, which have not been shown. In this example insulating plates 11 having projecting edge strips 15a,b have been used.

The system is supplemented by a remote central processing unit 30, for instance in the form of a smart phone or mobile phone/cell phone, having receiver 31 and display 32.

When a through-going damage, leak L, arises in the roof covering 21, in the roof 20, water may end up on the upper side 12a of plate 11, and move over it in the direction A, and then sink in direction B into the joint between plates 11 and 11'. The water will then end up on the sealing layer 23, contact the membrane layer 15 and is transported through it in direction C, and ends up below the transmitter unit 1. Due to the water in the membrane, an electric circuit/connection between moisture contact points 10a and 10b will be effected or be affected, and the transmitter 8 is energized by the battery 7. This may for instance happen when using the above-mentioned moisture-activated switch or when falling below a specific resistance value. The transmitter 8 then emits an RF-signal containing information about the transmitter's identity. The transmitted signal is received by receiver 31. In the remote processing unit 30, configured for coupling said signal to a pre-entered relation between ID of various transmitters and the location of the transmitter units, said signal is processed, among others resulting in a depiction on the display 32, accompanied by a vibration or sound to warn the bearer of the mobile phone. It is also possible to use a receiver receiving GPS-signals and having a separate power source. Said signals are processed by the processor 16 into a location data transmitted as location signal by the transmitter 8. The transmitted signal is then received again by receiver 31. In the processing unit 30, said signal is processed into a depiction on the display 32.

In the set-up of figure 1C, measurement data about the resistance between the electrodes are transmitted at regular intervals to a remote processing unit. In that case a moisture signal will not just be transmitted when a (suspected) moisture problem occurs, which is a kind of preliminary selection, but selection takes place remote on the basis of analysing the measurement signals.

For that purpose, in the example of figure 1C (the body is not shown) the transmitter unit has been provided with a measurement and transmission part 60, in which have been included a microprocessor 26, a timer or clock 45, a memory 44 (in which a (unique) ID has been stored) a transmitter 28 and an A/D converter 43. An antenna 29 has been connected to the transmitter 28. Further indicated is a long-life (>20 years) battery 27 (for instance a Lithium Thionyl Chloride battery) for the power source of the components on the measurement/transmission part 60. Two electrodes 40a,40b have been connected to the battery 27. A resistance 41 as well as a switch 42 have been accommodated in the connection between electrode 40b and the positive pole of the battery 27. The switch 42 can be operated by the processor 26, at specific time intervals, in this example of 12 hours each.

When closing the switch 42, the voltage over both electrodes 40a,b is measured, the level of which is a measure for the resistance between both electrodes and therefore for the quantity of moisture between the electrodes. The measurement data including ID are transmitted by the transmitter 28 to the remote central data processing unit, where the measured resistance value is compared with a pre-entered threshold value. When falling below the threshold value, a signal is emitted that a moisture problem possibly indicating a leak has been detected near the transmitter unit in question.

A capacitor, not shown here, to be charged by the battery 27 in the intervals, can be made use of as power source of the transmitter 28. In that way the battery 27 does not have to provide high power for a short while, as a result of which the desired long life is hardly limited.

It is also possible to place the transmitter units according to the invention between the transitions between insulating plates, see figure 4. At that location the transmitter unit 1' is situated in between two insulating plates 11', wherein the transmitter unit 1', by pressing in the EPS material, has been able to create its own accommodation spaces 13a and 13b. The moisture contact points have now been rotated 90 degrees so that they both come to lie below the plate transition. Moisture seeping downward in direction B ends up on the membrane layer 15 and reaches the moisture contact points 10a,10b. In figure 3B a few transmitter units 1' placed in that way have been shown by way of illustration.

In one embodiment the transmitter unit may have been configured for regularly, for instance once every twenty-four hours, transmitting a signal indicative of the standby position of the transmitter unit, optionally including information about the battery's condition. For that purpose, the processor has been provided with a timer.

Figure 2B-D show a number of alternative ways of carrying out the placement of the membrane at the bottom side 12b of the insulating plate 11, in figure 2B in a grid pattern of strips 15a,15b, with transmitter unit 1 in a corner, in figure 2C with strips 15 only along the edge, all round, with transmitter unit 1 in a corner, in figure 2D a combination of figures 2B and 2C, and in figure 2E in a star-shaped set-up of strips 15a,15b,15c, with the transmitter unit 1 in the centre, combined with a strip 15 extending all round the circumferential edge.

The invention is/inventions are not at all limited to the embodiments discussed in the description and shown in the drawings. The above description is included to illustrate the operation of preferred embodiments of the invention and not to limit the scope of the invention. Starting from the above explanation many variations that fall within the scope of the present invention will be evident to an expert. Variations of the parts described in the description and shown in the drawings are possible.

## Claims

1. Roof (20) including a supporting structure (24), a vapour barrier or sealing layer (23) situated above the supporting structure, a thermally insulating layer (22), which layer has been placed on the vapour barrier/sealing layer, and a layer of waterproof roof covering (21) situated above the insulating layer, and including at least one transmitter unit (1), which transmitter unit is operationally connected to a moisture sensor that has been provided with moisture contact points or electrodes (10a,10b) that cooperate together and are situated at the bottom side of the thermally insulating layer, wherein the transmitter unit (1) has been configured for transmitting a signal indicative of the presence of water/moisture at the electrodes, in particular of the moisture contact points or electrodes contacting water and preferably a signal indicative of the location of the transmitter unit, **characterized in that** said at least one transmitter unit (1) has been arranged in the thermally insulating layer (22), preferably in the bottom side of the thermally insulating layer, wherein the insulating layer (22) is composed of horizontally connecting insulating plates (11), and wherein the moisture contact points or electrodes are operationally connected to one or more strips or a layer (15, 15a,15b,15c) of moist-transporting or moist-absorbing material, which strip or layer has been arranged at the bottom side (12b) of the insulating plates (11).

2. Roof according to claim 1, wherein the insulating plate (11) in question has edges bounding the bottom side (12b), wherein the one or more strips or the layer (15, 15a,15b,15c) extend into at least one of the edges, preferably into each edge, wherein, preferably, the one or more strips or the layer extend along the entire circumference of the bottom side and/or, the one or more strips or the layer (15a,15b) of moisture-transporting material extend to beyond the circumferential edge of the insulating plate in question.

3. Roof according to claim 1 or 2, wherein the moisture-transporting material forms a layer (15) attached to the bottom side (12b) of the insulating plate in question, which layer preferably at least almost covers the entire surface of the insulating plate.

4. Roof according to any one of the preceding claims, wherein the transmitter unit (1) has been provided with a transmitter (8;28) for transmitting said signal and with a power source (8) for the transmitter, wherein
- the transmitter unit (1) has been configured for having the transmitter activated by the power source upon the moisture contact points or electrodes (10a,10b) contacting water, or
- the transmitter unit (1) has been configured for intermittently measuring a value, such as a resistance value, indicative of water/moisture between the electrodes (40a,40b) being present or not, wherein at fixed points in time the transmitter (28) is activated by the power source (27) for transmitting the measurement data, for processing them in a remote processing unit, in particular for comparing them to a pre-entered threshold value for the measured value.

5. Roof according to any one of the preceding claims, wherein the transmitter unit (1) has been provided with a receiver (8) for cooperating with a locator system, such as GPS.

6. Roof according to any one of the preceding claims, wherein the transmitter unit (1) has been accommodated in a body (2) enveloping the transmitter (8) and the power source (7) and carrying the moisture contact points (10a, 10b), wherein, preferably, the body has an upper end situated at a distance below the upper surface (12a) of the insulating plate (11), and the body having, preferably, over at least almost the full height a circular cross-section.

7. Roof according to claim 6, wherein the body, at least in an upper section (1a) (the section extending furthest into the insulating plate) tapers into a tip that may or may not be rounded off, in particular having an apex with an acute angle, in particular being cone-shaped.

8. Roof according to claim 7, wherein the body (2) has said tapering shape, such as a cone shape, over the full height, or
the body (2) - considered in vertical direction - has a multiple shape, in particular with said tapering upper section (1a) on a differently shaped lower section (1b), that is cylindrical, for instance.

9. Roof according to any one of the preceding claims, wherein at least some of the transmitter units (1) have been arranged in recesses (13) at the bottom side of an insulating plate (11), spaced apart from the latter's circumferential edge or wherein at least some of the transmitter units (1') have been arranged at the location of the transition of two insulating plates (11).

10. Insulating plate (11) of thermally insulating material, having a top side (12a) and a bottom side (12b), **characterized in that** at least one transmitter unit (1) has been arranged in the bottom side of the insulating plate, which transmitter unit is operationally connected to a moisture sensor that has been provided with moisture contact points or electrodes (10a,10b) that cooperate together and are situated at the bottom side of the insulating plate, wherein the transmitter unit has been configured for transmitting a signal indicative of the presence of moisture/water, in particular of the moisture contact points or electrodes contacting moisture/water and preferably a signal indicative of the location of the transmitter unit, wherein the moisture contact points or electrodes are operationally connected to one or more strips or a layer (15, 15a, 15b, 15c) of moisture-transporting or moisture-absorbing material, which one or more strips or layers have been arranged at the bottom side of the insulating plates.

11. Insulating plate according to claim 10, wherein the insulating plate (11) has edges bounding the bottom side, wherein the one or more strips or the layer (15,15a,15b,15c) extend into at least one of the edges, preferably into each edge, wherein, preferably, the one or more strips or the layer (15,15a,15b,15c) extend along the entire circumference of the bottom side, wherein, preferably, the one or more strips or the layer (15a,15b) of moisture-transporting material extend to beyond the circumferential edge of the insulating plate in question.

12. Insulating plate according to any claim 10 or 11, wherein the moisture-transporting material (15,15a,15b,15c) forms a layer attached to the bottom side of the insulating plate, which layer preferably at least almost covers the entire surface of the insulating plate (11).

13. Insulating plate according to claim 10, 11 or 12, wherein the transmitter unit (1) has been accommodated in a body (2) enveloping the transmitter and the power source, wherein, preferably, the body (2) has been configured in accordance with the characterising part of claim 7 or 8.

14. Insulating plate according to any one of the claims 10-13, wherein at the top side (12a) facing away from the transmitter unit, the insulating plate has been provided with an indicator (14) for the transmitter unit's presence in the plate, wherein, preferably, at the top side (12a) facing away from the transmitter unit, the insulating plate has been provided with an indicator (14) for the transmitter unit's position in the plate.

15. Roof leak detection system comprising a roof according to any one of the claims 1-9 and a processing unit including a receiver for location signals (ID and/or position signals) and/or signals indicative of the presence of moisture/water transmitted by the transmitter units, and a presenting device, such as a display, wherein the processing unit has preferably been configured for having the presenting device indicate the location of a transmitter unit when the latter has transmitted the moisture signal, wherein, preferably, the system further comprises an alerting means for making known that a transmitter unit has transmitted the ID and/or position signal and/or moisture signal, wherein, preferably, the processing unit comprises a memory for storing data regarding the location of the transmitter units.

## Patentansprüche

1. Dach (20), welches eine Stützkonstruktion (24), eine Dampfsperre oder Dichtungsschicht (23), die sich über der Stützkonstruktion befindet, eine wärmedämmende Schicht (22), wobei diese Schicht auf der Dampfsperre/Dichtungsschicht angeordnet ist, und eine Schicht einer wasserdichten Dachabdeckung (21), die sich über der Dämmschicht befindet, aufweist und wenigstens eine Sendereinheit (1) aufweist, wobei diese Sendereinheit mit einem Feuchtigkeitssensor in Wirkverbindung steht, welcher mit Feuchtigkeits-Kontaktpunkten oder Elektroden (10a, 10b) versehen worden ist, welche zusammenwirken und sich an der Unterseite der wärmedämmenden Schicht befinden, wobei die Sendereinheit (1) dafür ausgelegt ist, ein Signal, das für das Vorhandensein von Wasser/Feuchtigkeit an den Elektroden, insbesondere der Feuchtigkeits-Kontaktpunkte oder Elektroden, die sich mit Wasser in Kontakt befinden, indikativ ist, und vorzugsweise ein Signal, das für den Ort der Sendereinheit indikativ ist, zu senden, **dadurch gekennzeichnet, dass** die wenigstens eine Sendereinheit (1) in der wärmedämmenden Schicht (22), vorzugsweise in der Unterseite der wärmedämmenden Schicht, angeordnet worden ist, wobei die wärmedämmende Schicht (22) aus horizontal in Verbindung stehenden Dämmstoffplatten (11) zusammengestellt ist, und wobei die Feuchtigkeits-Kontaktpunkte oder Elektroden mit einem oder mehreren Streifen oder einer Schicht (15, 15a, 15b, 15c) eines Feuchtigkeit transportierenden oder Feuchtigkeit absorbierenden Materials in Wirkverbindung stehen, wobei dieser Streifen oder diese Schicht an der Unterseite (12b) der Dämmstoffplatten (11) angeordnet worden ist.

2. Dach nach Anspruch 1, wobei die betreffende Dämmstoffplatte (11) Ränder aufweist, welche die Unterseite (12b) begrenzen, wobei der eine oder die mehreren Streifen oder die Schicht (15, 15a, 15b, 15c) sich in wenigstens einen der Ränder, vorzugsweise in jeden Rand, hinein erstrecken, wobei vorzugsweise der eine oder die mehreren Streifen oder die Schicht sich entlang des gesamten Umfangs der Unterseite erstrecken und/oder der eine oder die mehreren Streifen oder die Schicht (15a, 15b) eines Feuchtigkeit transportierenden Materials sich bis über den Umfangsrand der betreffenden Dämmstoffplatte hinaus erstrecken.

3. Dach nach Anspruch 1 oder 2, wobei das Feuchtigkeit transportierende Material eine Schicht (15) bildet, die an der Unterseite (12b) der betreffenden Dämmstoffplatte angebracht ist, wobei diese Schicht vorzugsweise wenigstens nahezu die gesamte Fläche der Dämmstoffplatte bedeckt.

4. Dach nach einem der vorhergehenden Ansprüche, wobei die Sendereinheit (1) mit einem Sender (8; 28) zum Senden des Signals und mit einer Stromquelle (8) für den Sender versehen worden ist, wobei
- die Sendereinheit (1) dafür ausgelegt ist, dass der Sender von der Stromquelle aktiviert wird, wenn die Feuchtigkeits-Kontaktpunkte oder Elektroden (10a, 10b) mit Wasser in Kontakt kommen, oder
- die Sendereinheit (1) dafür ausgelegt ist, einen Wert wie etwa einen Widerstandswert, der dafür indikativ ist, ob Wasser/Feuchtigkeit zwischen den Elektroden (40a, 40b) vorhanden ist oder nicht, periodisch zu messen, wobei der Sender (28) zu festen Zeitpunkten von der Stromquelle (27) aktiviert wird, zum Senden der Messdaten, zum Verarbeiten derselben in einer entfernten Verarbeitungseinheit, insbesondere zum Vergleichen derselben mit einem zuvor eingegebenen Schwellenwert für den Messwert.

5. Dach nach einem der vorhergehenden Ansprüche, wobei die Sendereinheit (1) mit einem Empfänger (8) zum Zusammenwirken mit einem Positionsbestimmungssystem wie etwa GPS versehen worden ist.

6. Dach nach einem der vorhergehenden Ansprüche, wobei die Sendereinheit (1) in einem Gehäuse (2) untergebracht ist, das den Sender (8) und die Stromquelle (7) umschließt und die Feuchtigkeits-Kontaktpunkte (10a, 10b) trägt, wobei das Gehäuse vorzugsweise ein oberes Ende aufweist, das sich in einem Abstand unterhalb der Oberseite (12a) der Dämmstoffplatte (11) befindet, und wobei das Gehäuse vorzugsweise auf wenigstens nahezu der gesamten Höhe einen kreisförmigen Querschnitt aufweist.

7. Dach nach Anspruch 6, wobei sich das Gehäuse wenigstens in einem oberen Abschnitt (1a) (dem Abschnitt, der sich am weitesten in die Dämmstoffplatte hinein erstreckt) konisch zu einem Gipfel verjüngt, welche abgerundet oder nicht abgerundet sein kann, insbesondere einen Scheitelpunkt mit einem spitzen Winkel aufweist und insbesondere kegelförmig ist.

8. Dach nach Anspruch 7, wobei das Gehäuse (2) die sich verjüngende Form, wie etwa eine Kegelform, auf der gesamten Höhe aufweist, oder
das Gehäuse (2), in vertikaler Richtung betrachtet, eine zusammengesetzte Form aufweist, insbesondere mit dem sich verjüngenden oberen Abschnitt (1a) auf einem anders geformten unteren Abschnitt (1b), welcher zum Beispiel zylindrisch ist.

9. Dach nach einem der vorhergehenden Ansprüche, wobei wenigstens einige der Sendereinheiten (1) in Vertiefungen (13) an der Unterseite einer Dämmstoffplatte (11) angeordnet worden sind, die vom Umfangsrand der Letzteren beabstandet sind, oder wobei wenigstens einige der Sendereinheiten (1') am Ort des Übergangs zweier Dämmstoffplatten (11) angeordnet worden sind.

10. Dämmstoffplatte (11) aus wärmedämmendem Material, welche eine Oberseite (12a) und eine Unterseite (12b) aufweist, **dadurch gekennzeichnet, dass** wenigstens eine Sendereinheit (1) in der Unterseite der Dämmstoffplatte angeordnet worden ist, wobei diese Sendereinheit mit einem Feuchtigkeitssensor in Wirkverbindung steht, welcher mit Feuchtigkeits-Kontaktpunkten oder Elektroden (10a, 10b) versehen worden ist, welche zusammenwirken und sich an der Unterseite der Dämmstoffplatte befinden, wobei die Sendereinheit dafür ausgelegt ist, ein Signal, das für das Vorhandensein von Feuchtigkeit/Wasser, insbesondere der Feuchtigkeits-Kontaktpunkte oder Elektroden, die sich mit Feuchtigkeit/Wasser in Kontakt befinden, indikativ ist, und vorzugsweise ein Signal, das für den Ort der Sendereinheit indikativ ist, zu senden, wobei die Feuchtigkeits-Kontaktpunkte oder Elektroden mit einem oder mehreren Streifen oder einer Schicht (15, 15a, 15b, 15c) eines Feuchtigkeit transportierenden oder Feuchtigkeit absorbierenden Materials in Wirkverbindung stehen, wobei dieser eine oder diese mehreren Streifen oder Schichten an der Unterseite der Dämmstoffplatten angeordnet worden sind.

11. Dämmstoffplatte nach Anspruch 10, wobei die Dämmstoffplatte (11) Ränder aufweist, welche die Unterseite begrenzen, wobei der eine oder die mehreren Streifen oder die Schicht (15, 15a, 15b, 15c) sich in wenigstens einen der Ränder, vorzugsweise in jeden Rand, hinein erstrecken, wobei vorzugsweise der eine oder die mehreren Streifen oder die Schicht (15, 15a, 15b, 15c) sich entlang des gesamten Umfangs der Unterseite erstrecken, wobei vorzugsweise der eine oder die mehreren Streifen oder die Schicht (15a, 15b) eines Feuchtigkeit transportierenden Materials sich bis über den Umfangsrand der betreffenden Dämmstoffplatte hinaus erstrecken.

12. Dämmstoffplatte nach einem der Ansprüche 10 oder 11, wobei das Feuchtigkeit transportierende Material (15, 15a, 15b, 15c) eine Schicht bildet, die an der Unterseite der Dämmstoffplatte angebracht ist, wobei diese Schicht vorzugsweise wenigstens nahezu die gesamte Fläche der Dämmstoffplatte (11) bedeckt.

13. Dämmstoffplatte nach Anspruch 10, 11 oder 12, wobei die Sendereinheit (1) in einem Gehäuse (2) untergebracht ist, das den Sender und die Stromquelle umschließt, wobei vorzugsweise das Gehäuse (2) gemäß dem Kennzeichenteil von Anspruch 7 oder 8 gestaltet ist.

14. Dämmstoffplatte nach einem der Ansprüche 10-13, wobei an der von der Sendereinheit abgewandten Oberseite (12a) die Dämmstoffplatte mit einem Indikator (14) für das Vorhandensein der Sendereinheit in der Platte versehen worden ist, wobei vorzugsweise an der von der Sendereinheit abgewandten Oberseite (12a) die Dämmstoffplatte mit einem Indikator (14) für die Position der Sendereinheit in der Platte versehen worden ist.

15. Dachleck-Detektionssystem, welches ein Dach nach einem der Ansprüche 1-9 und eine Verarbeitungseinheit umfasst, welche einen Empfänger für Ortungssignale (ID- und/oder Positionssignale) und/oder für das Vorhandensein von Feuchtigkeit/Wasser indikative Signale, die von den Sendereinheiten gesendet wurden, und eine Anzeigevorrichtung wie etwa ein Display aufweist, wobei die Verarbeitungseinheit vorzugsweise dafür ausgelegt ist zu bewirken, dass die Anzeigevorrichtung den Ort einer Sendereinheit anzeigt, wenn die Letztere das Feuchtigkeitssignal gesendet hat, wobei vorzugsweise das System ferner ein Alarmierungsmittel zum Bekanntmachen, dass eine Sendereinheit das ID- und/oder Positionssignal und/oder Feuchtigkeitssignal gesendet hat, umfasst, wobei vorzugsweise die Verarbeitungseinheit einen Speicher zum Speichern von Daten, die den Ort der Sendereinheiten betreffen, umfasst.

## Revendications

1. Toit (20) comprenant une structure de support (24), une barrière anti-vapeur ou une couche d'étanchéité (23) située au-dessus de la structure de support, une couche thermiquement isolante (22), ladite couche ayant été placée sur la barrière anti-vapeur/couche d'étanchéité, et une couche de revêtement de toit imperméable à l'eau (21) située au-dessus de la couche isolante, et comprenant au moins une unité d'émetteur (1), ladite unité d'émetteur étant connectée de façon opérationnelle à un capteur d'humidité qui a été pourvu de points ou d'électrodes de contact d'humidité (10a, 10b) qui coopèrent ensemble et qui sont situé(e)s au côté inférieur de la couche thermiquement isolante, dans lequel l'unité d'émetteur (1) a été configurée de manière à transmettre un signal indicatif de la présence d'eau/d'humidité au niveau des électrodes, en particulier d'un contact des points ou des électrodes de contact d'humidité avec de l'eau, et de préférence un signal indicatif de la position de l'unité d'émetteur, **caractérisé en ce que** ladite au moins une unité d'émetteur (1) a été agencée dans la couche thermiquement isolante (22), de préférence dans le côté inférieur de la couche thermiquement isolante, dans lequel la couche isolante (22) est composée de plaques isolantes à connexion horizontale (11), et dans lequel les points ou les électrodes de contact d'humidité sont connecté(e)s de façon opérationnelle à une ou plusieurs bande(s) ou à une couche (15, 15a, 15b, 15c) d'un matériau de transport d'humidité ou d'absorption d'humidité, ladite bande ou couche ayant été agencée au niveau du côté inférieur (12b) des plaques isolantes (11).

2. Toit selon la revendication 1, dans lequel la plaque isolante (11) en question présente des bords qui délimitent le côté inférieur (12b), dans lequel ladite/lesdites une ou plusieurs bande(s) ou la couche (15, 15a, 15b, 15c) s'étend(ent) dans au moins un des bords, de préférence dans chaque bord, dans lequel, de préférence, ladite/lesdites une ou plusieurs bande(s) ou ladite couche s'étend(ent) le long de la totalité de la circonférence du côté inférieur, et/ou ladite/lesdites une ou plusieurs bande(s) ou ladite couche (15a, 15b) de matériau de transport d'humidité s'étend(ent) jusqu'au-delà du bord circonférentiel de la plaque isolante en question.

3. Toit selon la revendication 1 ou 2, dans lequel le matériau de transport d'humidité forme une couche (15) attachée au côté inférieur (12) de la plaque isolante en question, ladite couche couvrant de préférence au moins pratiquement la totalité de la surface de la plaque isolante.

4. Toit selon l'une quelconque des revendications précédentes, dans lequel l'unité d'émetteur (1) a été équipée d'un émetteur (8; 28) pour transmettre ledit signal et d'une source de courant (8) pour l'émetteur, dans lequel:
l'unité d'émetteur (1) a été configurée de telle sorte que l'émetteur soit activé par la source de courant lorsque les points ou les électrodes de contact d'humidité (10a, 10b) entrent en contact avec de l'eau, ou
l'unité d'émetteur (1) a été configurée de manière à mesurer de façon intermittente une valeur, telle qu'une valeur de résistance, qui est indicative de la présence ou de l'absence d'eau/d'humidité entre les électrodes (40a, 40b), dans lequel à des points fixes dans le temps l'émetteur (28) est activé par la source de courant (27) pour transmettre les données de mesure, pour traiter celles-ci dans une unité de traitement distante, et en particulier pour comparer celles-ci à une valeur de seuil préenregistrée pour la valeur mesurée.

5. Toit selon l'une quelconque des revendications précédentes, dans lequel l'unité d'émetteur (1) a été équipée d'un récepteur (8) pour coopérer avec un système de localisation tel qu'un GPS.

6. Toit selon l'une quelconque des revendications précédentes, dans lequel l'unité d'émetteur (1) a été logée dans un corps (2) qui enveloppe l'émetteur (8) et la source de courant (7) et qui comporte les points de contact d'humidité (10a, 10b), dans lequel, de préférence, le corps présente une extrémité supérieure située à une certaine distance en dessous de la surface supérieure (12a) de la plaque isolante (11), et le corps présente une section transversale circulaire de préférence sur au moins pratiquement la totalité de sa hauteur.

7. Toit selon la revendication 6, dans lequel le corps, au moins dans une section supérieure (1a) (la section qui s'étend le plus loin dans la plaque isolante) s'amincit en une pointe qui peut être ou ne pas être arrondie, en particulier avec un sommet qui présente un angle aigu, en particulier ayant une forme conique.

8. Toit selon la revendication 7, dans lequel le corps (2) présente ladite forme effilée, telle qu'une forme conique, sur la totalité de sa hauteur, ou le corps (2) - considéré dans la direction verticale - présente une forme multiple, en particulier avec ladite section supérieure conique (1a) sur une section inférieure de forme différente (1b), par exemple cylindrique.

9. Toit selon l'une quelconque des revendications précédentes, dans lequel au moins plusieurs des unités d'émetteur (1) ont été agencées dans des évidements (13) au niveau du côté inférieur d'une plaque isolante (11), espacés du bord circonférentiel de celle-ci, ou dans lequel au moins plusieurs des unités d'émetteur (1') ont été agencées au niveau de la position de la transition entre deux plaques isolantes (11).

10. Plaque isolante (11) constituée d'un matériau thermiquement isolant, présentant un côté supérieur (12a) et un côté inférieur (12b), **caractérisée en ce qu'**au moins une unité d'émetteur (1) a été agencée dans le côté inférieur de la plaque isolante, ladite unité d'émetteur étant connectée de façon opérationnelle à un capteur d'humidité qui a été pourvu de points ou d'électrodes de contact d'humidité (10a, 10b) qui coopèrent ensemble et qui sont situé(e)s au côté inférieur de la plaque isolante, dans laquelle l'unité d'émetteur a été configurée de manière à transmettre un signal indicatif de la présence d'humidité/d'eau, en particulier d'un contact des points ou des électrodes de contact d'humidité avec de l'humidité/de l'eau, et de préférence un signal indicatif de la position de l'unité d'émetteur, et dans laquelle les points ou les électrodes de contact d'humidité sont connecté(e)s de façon opérationnelle à une ou plusieurs bande(s) ou à une couche (15, 15a, 15b, 15c) d'un matériau de transport d'humidité ou d'absorption d'humidité, ladite/lesdites une ou plusieurs bande(s) ou ladite couche ayant été agencée(s) au niveau du côté inférieur (12b) des plaques isolantes.

11. Plaque isolante selon la revendication 10, dans laquelle la plaque isolante (11) présente des bords qui délimitent le côté inférieur, dans laquelle ladite/lesdites une ou plusieurs bande(s) ou la couche (15, 15a, 15b, 15c) s'étend(ent) dans au moins un des bords, de préférence dans chaque bord, dans laquelle, de préférence, ladite/lesdites une ou plusieurs bande(s) ou ladite couche (15, 15a, 15b, 15c) s'étend(ent) le long de la totalité de la circonférence du côté inférieur, dans laquelle, de préférence, ladite/lesdites une ou plusieurs bande(s) ou ladite couche (15a, 15b) de matériau de transport d'humidité s'étend(ent) jusqu'au-delà du bord circonférentiel de la plaque isolante en question.

12. Plaque isolante selon l'une quelconque des revendications 10 ou 11, dans laquelle le matériau de transport d'humidité (15, 15a, 15b, 15c) forme une couche attachée au côté inférieur de la plaque isolante, ladite couche couvrant de préférence au moins pratiquement la totalité de la surface de la plaque isolante (11) .

13. Plaque isolante selon la revendication 10, 11 ou 12, dans laquelle l'unité d'émetteur (1) a été logée dans un corps (2) qui enveloppe l'émetteur et la source de courant, dans laquelle, de préférence, le corps (2) a été configuré conformément à la partie caractérisante de la revendication 7 ou 8.

14. Plaque isolante selon l'une quelconque des revendications 10 à 13, dans laquelle au niveau du côté supérieur (12a) qui tourne le dos à l'unité d'émetteur, la plaque isolante a été équipée d'un indicateur (14) pour indiquer la présence de l'unité d'émetteur dans la plaque, dans laquelle, de préférence, au niveau du côté supérieur (12a) qui tourne le dos à l'unité d'émetteur, la plaque isolante a été équipée d'un indicateur (14) pour indiquer la position de l'unité d'émetteur dans la plaque.

15. Système de détection de fuite dans un toit, comprenant un toit selon l'une quelconque des revendications 1 à 9 et une unité de traitement comprenant un récepteur de signaux de localisation (signaux ID et/ou de position) et/ou de signaux indicatifs de la présence d'humidité/d'eau transmis par les unités d'émetteur, et un dispositif de présentation, tel qu'un écran d'affichage, dans lequel l'unité de traitement a de préférence été configurée de telle sorte que le dispositif de présentation indique la position d'une unité d'émetteur lorsque cette dernière a émis le signal d'humidité, dans lequel, de préférence, le système comprend en outre des moyens d'alerte pour informer qu'une unité d'émetteur a transmis le signal ID et/ou de position et/ou un signal d'humidité, dans lequel, de préférence, l'unité de traitement comprend une mémoire pour stocker des données relatives à la position des unités d'émetteur.
